# EUROPÄISCHE PATENTANMELDUNG

(11) **EP 4 372 977 A1**
(43) Veröffentlichungstag der Anmeldung: **22.05.2024**
(21) Anmeldenummer: 23203449.6
(22) Anmeldetag: 13.10.2023
(51) Int. Cl.: H02P 5/74, H02P 6/04

(54) **ANTRIEBSSYSTEM**

(30) Priorität: 15.11.2022 BE 202205923
(71) Anmelder: Miele & Cie. KG, 33332 Gütersloh (DE)
(72) Erfinder: Schaefer-van den Boom, Klaus, 53489 Sinzig (DE); Rech, Thomas, 53881 Euskirchen (DE); Sammoud, Hafedh, 8090 Kelibia (TN)

(57) **Zusammenfassung**

Antriebssystem (1) mit wenigstens einem Dreiphasen-Motor (M3) und mit wenigstens einem Frequenzumrichter (15) mit einer ersten Halbbrücke (12), einer zweiten Halbbrücke (13) und einer dritten Halbbrücke (14), wobei der Frequenzumrichter (15) ausgebildet ist, den Dreiphasen-Motor (M3) mittels aller drei Halbbrücken (12, 13, 14) zu betreiben, gekennzeichnet durch ferner wenigstens einen ersten Einphasen-Motor (M1a) und ferner wenigstens einen zweiten Einphasen-Motor (M1b), wobei der Frequenzumrichter (15) ferner ausgebildet ist, den Dreiphasen-Motor (M3) nur mittels der ersten Halbbrücke (12) und der dritten Halbbrücke (14) oder nur mittels der zweiten Halbbrücke (13) und der dritten Halbbrücke (14) zu betreiben, den ersten Einphasen-Motor (M1a) mittels der ersten Halbbrücke (12) und der dritten Halbbrücke (14) alternativ oder zusätzlich zum Dreiphasen-Motor (M3) zu betreiben, wobei die erste Halbbrücke (12) mittels eines ersten Umschalters (16a) zwischen dem Dreiphasen-Motor (M3) und dem ersten Einphasen-Motor (M1a) umgeschaltet werden kann, und den zweiten Einphasen-Motor (M1b) mittels der zweiten Halbbrücke (13) und der dritten Halbbrücke (14) alternativ oder zusätzlich zum Dreiphasen-Motor (M3) zu betreiben, wobei die zweite Halbbrücke (13) mittels eines zweiten Umschalters (16b) zwischen dem Dreiphasen-Motor (M3) und dem zweiten Einphasen-Motor (M1b) umgeschaltet werden kann, und wobei die dritte Halbbrücke (14) sowohl mit dem Dreiphasen-Motor (M3) und als auch mit dem ersten Einphasen-Motor (M1a) als auch mit dem zweiten Einphasen-Motor (M1b) verbunden ist.

## Beschreibung

Die Erfindung betrifft ein Antriebssystem sowie ein Haushaltsgerät mit einem derartigen Antriebssystem.

Zu den bekannten elektrischen Motoren gehören auch die Synchronmotoren, welche einphasig mit Wechselstrom oder mehrphasig mit Drehstrom betrieben werden können. In jedem Fall wird ein konstant magnetisierter Läufer verwendet, welcher auch als Rotor bezeichnet werden kann. Hierzu können Permanentmagnete oder eine elektromagnetische Fremderregung verwendet werden. Die Bezeichnung Synchronmotor resultiert daraus, dass der Rotor von einem bewegten magnetischen Drehfeld im Ständer, auch Stator genannt, synchron mitgenommen wird. Somit weist der Synchronmotor im Betrieb eine zur Wechselspannung synchrone Bewegung auf, dessen Drehzahl über die Polpaarzahl des Stators des Synchronmotors mit der Frequenz der Wechselspannung verknüpft ist.

Mehrsträngige Permanentmagnet-Synchronmotoren werden üblicherweise über einen Frequenzumrichter betrieben, wodurch ein geregelter Betrieb ermöglicht wird, indem Drehrichtung, Drehzahl und Drehmoment des Synchronmotors über die Frequenz und Amplitude der Ausgangswechselspannung des Frequenzumrichters vorgegeben werden können. Die Ausgangsspannung des Frequenzumrichters kann mittels Pulsweitenmodulation erfolgen. In jedem Fall kann vom Frequenzumrichter ein elektrisches Drehfeld mit variablen Spannungsamplituden und bzw. oder mit variabler Drehfrequenz erzeugt werden, was als feldorientierte Regelung bezeichnet werden kann. Dies kann das Drehverhalten des Synchronmotors z.B. beim Anlauf sowie in Abhängigkeit der anzutreibenden Last gezielt beeinflussen. Für mehrsträngige Permanentmagnet-Synchronmotoren ist ferner die Brushless-DC-Ansteuerung bekannt.

Nachteilig ist hierbei, dass derartige Frequenzumrichter zusätzliche Kosten verursachen und zusätzlichen Bauraum benötigen können. Neben dem Frequenzumrichter selbst können diese Kosten durch weitere Elektronik im Antriebssystem entstehen. Gerade diese Kosten sind bei verschiedenen einfachen Anwendungen wie z.B. bei einfachen Pumpen wie z.B. bei Laugenpumpen in Waschmaschinen höchst unerwünscht, weil die durch den Frequenzumrichter geschaffenen Möglichkeiten der Regelung bzw. der Steuerung des Synchronmotors für diese Anwendungen gar nicht benötigt werden und sich somit die Mehrkosten des Frequenzumrichters nicht rentieren. Zu derartigen einfachen Anwendungen wie z.B. bei Laugenpumpen in Waschmaschinen gehören das Abpumpen der Lauge aus dem Waschraum oder das Umfluten. In beiden Fällen ist ein geregelter Betrieb des jeweiligen Pumpenmotors nicht erforderlich.

Als kostengünstige Alternative zu mittels Frequenzumrichtern betriebenen Synchronmotoren ist es bei einfachen Anwendungen wie z.B. bei Laugenpumpen in Waschmaschinen bekannt ungeregelte Einphasen-Synchronmotoren als Antriebe z.B. von Laugenpumpen einzusetzen. Hierbei werden üblicherweise permanenterregte Einphasen-Synchronmotoren eingesetzt. Diese Motoren können auch mehrpolig ausgeführt sein, das bedeutet, dass sie eine Polpaarzahl > 1 aufweisen und damit die elektrische Frequenz über den Faktor p einem Vielfachen der mechanischen Drehzahl entspricht.

Wie bereits allgemein erwähnt ist es auch bei permanenterregten Einphasen-Synchronmotoren gegeben, dass diese im Betrieb eine zur Wechselspannung synchrone Bewegung ausführen, deren Drehzahl über die Polpaarzahl des Stators mit der Frequenz der Wechselspannung verknüpft ist. Somit ist der Betrieb eines permanenterregten Einphasen-Synchronmotors mit der Frequenz der Wechselspannung des Netzes sehr einfach möglich und es kann auf kostenintensive Steuerungen sowie Frequenzumrichter verzichtet werden. Vielmehr ist eine einfache Ansteuerung des Einphasen-Synchronmotors über eine Schalteinheit (Relais oder Triac) ausreichend, welche von einer Steuerungseinheit betrieben werden kann. Dies kommt insbesondere einfachen Anwendungen wie z.B. dem Einsatz von Laugenpumpen in Waschmaschinen zugute, welche ungeregelt mit konstanter Drehzahl betrieben werden.

Weiterhin ist eine Ansteuerung des Einphasen-Synchronmotors über eine H-Brücke möglich, welche von einer Steuerungseinheit betrieben werden kann.

Trotz des höheren Aufwands der Ansteuerung bei Dreiphasen-Synchronmotoren mittels eines Frequenzumrichters kann dieser Aufwand aufgrund der Vorteile gerechtfertigt sein, welche Dreiphasen-Synchronmotoren bieten können. Hierzu gehören neben einem konstanten Drehmomentenverlauf (keine "Null-Moment-Rotorpositionen") auch die hohe Dynamik, das hohe Drehmoment und die hohe Effizienz.

Wird in einem Gerät wie beispielsweise in einem Haushaltsgerät wenigstens ein geregelt betriebener Einphasen-Synchronmotor verwendet, beispielsweise in einer Waschmaschine für die Umflutpumpe und bzw. oder für die Laugenpumpe, so ist auch eine H-Brücke (Frequenzumrichter) und eine Steuerungseinheit für den Einphasen-Synchronmotor erforderlich. Wird ferner wenigstens ein Dreiphasen-Synchronmotor verwendet, so ist zusätzlich ein Frequenzumrichter erforderlich. Beides führt zu entsprechenden Herstellungskosten hinsichtlich Material- und Montageaufwand, erhöht den Platzbedarf im Gerät bzw. auf der Elektronik sowie den Stromverbrauch und bzw. oder die erzeugte Abwärme. Dies gilt ebenso für andere Einphasen- sowie Dreiphasen-Motoren.

Der Erfindung stellt sich somit das Problem, ein Antriebssystem der eingangs beschriebenen Art bereitzustellen, welches mehrere Motoren, insbesondere mehrere einphasige und dreiphasige Motoren, betreiben kann. Dies soll parallel, d.h. gleichzeitig, oder alternativ zueinander erfolgen können. In jedem Fall soll dies mit einem möglichst geringen elektronischen bzw. schaltungstechnischen Aufwand erfolgen können. Dies soll insbesondere kostengünstig, bauraumsparend, energiesparend und bzw. oder mit einer geringen Abwärme erfolgen können. Zumindest soll eine Alternative zu bekannten derartigen Antriebssystemen geschaffen werden.

Erfindungsgemäß wird dieses Problem durch ein Antriebssystem sowie durch ein Haushaltsgerät mit den Merkmalen der unabhängigen Ansprüche gelöst. Vorteilhafte Ausgestaltungen und Weiterbildungen der Erfindung ergeben sich aus den nachfolgenden Unteransprüchen.

Somit betrifft die Erfindung ein Antriebssystem mit wenigstens einem Dreiphasen-Motor, vorzugsweise einem Dreiphasen-Synchronmotor, und mit wenigstens einem Frequenzumrichter mit einer ersten Halbbrücke, einer zweiten Halbbrücke und einer dritten Halbbrücke, wobei der Frequenzumrichter ausgebildet ist, den Dreiphasen-Motor mittels aller drei Halbbrücken zu betreiben.

Das Antriebssystem ist gekennzeichnet durch ferner wenigstens einen ersten Einphasen-Motor, vorzugsweise einen ersten Einphasen-Synchronmotor, und ferner wenigstens einen zweiten Einphasen-Motor, vorzugsweise einen zweiten Einphasen-Synchronmotor, wobei der Frequenzumrichter ferner ausgebildet ist,
- den Dreiphasen-Motor nur mittels der ersten Halbbrücke und der dritten Halbbrücke oder nur mittels der zweiten Halbbrücke und der dritten Halbbrücke zu betreiben,
- den ersten Einphasen-Motor mittels der ersten Halbbrücke und der dritten Halbbrücke alternativ oder zusätzlich zum Dreiphasen-Motor zu betreiben,
   wobei die erste Halbbrücke mittels eines ersten Umschalters, vorzugsweise mittels eines ersten Umschalt-Relais, zwischen dem Dreiphasen-Motor und dem ersten Einphasen-Motor umgeschaltet werden kann, und
- den zweiten Einphasen-Motor mittels der zweiten Halbbrücke und der dritten Halbbrücke alternativ oder zusätzlich zum Dreiphasen-Motor zu betreiben,
   wobei die zweite Halbbrücke mittels eines zweiten Umschalters, vorzugsweise mittels eines zweiten Umschalt-Relais, zwischen dem Dreiphasen-Motor und dem zweiten Einphasen-Motor umgeschaltet werden kann,
wobei die dritte Halbbrücke sowohl mit dem Dreiphasen-Motor als auch mit dem ersten Einphasen-Motor als auch mit dem zweiten Einphasen-Motor verbunden ist. Der Dreiphasen-Motor kann ein Hauptantrieb des Antriebssystems und die Einphasen-Motoren können Hilfsantriebe des Antriebssystems sein.

Mit anderen Worten kann mittels des Frequenzumrichters zum einen mittels aller drei Halbbrücken der Dreiphasen-Motor wie bisher bekannt (z.B. Vektorregelung und Beobachter zur Rotorlageerfassung) betrieben und dabei die Vorteile eines Frequenzumrichters zum Betreiben eines elektrischen Dreiphasen-Motors genutzt werden. Zusätzlich kann derselbe Frequenzumrichter auch für den Betrieb von zwei weiteren elektrischen Einphasen-Motoren verwendet werden, um jeweils eine zusätzliche elektronische Schaltung zu deren Betrieb einzusparen bzw. zu vermeiden. Gleichzeitig können auf diese Art und Weise auch die zwei Einphasen-Motoren mittels eines Frequenzumrichters betrieben und entsprechend dessen Vorteile auch dort genutzt werden. Entsprechend kann jeder der drei Motoren einzeln mittels des Frequenzumrichters wie bisher bekannt, d.h. mit voller Leistungsfähigkeit, betrieben werden. Es können auch beide Einphasen-Motoren gleichzeitig, d.h. parallel zueinander, mittels des Frequenzumrichters mit voller Leistungsfähigkeit, betrieben werden. Ferner kann auch einer der beiden Einphasen-Motoren mittels des Frequenzumrichters mit voller Leistungsfähigkeit und zusätzlich der Dreiphasen-Motor mittels des Frequenzumrichters mit reduzierter Leistungsfähigkeit, wie weiter unten näher beschrieben werden wird, betrieben werden. Die elektrischen oder mechanischen Drehzahlen der einzelnen Motoren können sich dabei unterscheiden.

Dies kann den schaltungstechnischen Aufwand entsprechend reduzieren, um drei elektrische Motoren betreiben zu können, da der Frequenzumrichter zusätzlich, wie zuvor bereits beschrieben, oder auch alternativ doppelt oder sogar dreifach verwendet werden kann. Dies kann die Kosten hinsichtlich Material- und Montageaufwand ebenso reduzieren wie den Platzbedarf, den Energieverbrauch und bzw. oder die Wärmeerzeugung. Dies mittels eines ersten Umschalters der ersten Halbbrücke sowie mittels eines zweiten Umschalters der dritten Halbbrücke umzusetzen, kann insbesondere den schaltungstechnischen Aufwand minimieren. Somit kann die erste Halbbrücke des Frequenzumrichters nicht oder zum Betrieb des ersten Einphasen-Motors verwendet werden, wenn der Dreiphasen-Motor nur mittels der zweiten Halbbrücke und der dritten Halbbrücke betrieben wird. Dies gilt analog ebenso für die dritte Halbbrücke und den zweiten Einphasen-Motor. Hier kann die dritte Halbbrücke des Frequenzumrichters nicht oder zum Betrieb des zweiten Einphasen-Motors verwendet werden, wenn der Dreiphasen-Motor nur mittels der ersten Halbbrücke und der zweiten Halbbrücke betrieben wird.

Insbesondere können auf diese Art und Weise die Eigenschaften und Vorteile eines Relais genutzt werden.

Die Erfindung betrifft auch ein alternatives Antriebssystem mit wenigstens einem Dreiphasen-Motor, vorzugsweise einem Dreiphasen-Synchronmotor, und mit wenigstens einem Frequenzumrichter mit einer ersten Halbbrücke, einer zweiten Halbbrücke und einer dritten Halbbrücke, wobei der Frequenzumrichter ausgebildet ist, den Dreiphasen-Motor mittels aller drei Halbbrücken zu betreiben.

Das Antriebssystem ist gekennzeichnet durch ferner wenigstens einen ersten Einphasen-Motor, vorzugsweise einen ersten Einphasen-Synchronmotor, und ferner wenigstens einen zweiten Einphasen-Motor, vorzugsweise einen zweiten Einphasen-Synchronmotor, wobei der Frequenzumrichter ferner ausgebildet ist,
- den Dreiphasen-Motor nur mittels der ersten Halbbrücke und der dritten Halbbrücke oder nur mittels der zweiten Halbbrücke und der dritten Halbbrücke zu betreiben,
- den ersten Einphasen-Motor mittels der ersten Halbbrücke und der dritten Halbbrücke alternativ oder zusätzlich zum Dreiphasen-Motor zu betreiben,
   wobei die erste Halbbrücke mittels eines ersten Umschalters, vorzugsweise mittels eines ersten Umschalt-Relais, zwischen dem Dreiphasen-Motor und dem ersten Einphasen-Motor umgeschaltet werden kann, und
- den zweiten Einphasen-Motor mittels der ersten Halbbrücke und der dritten Halbbrücke alternativ zum ersten Einphasen-Motor und alternativ oder zusätzlich zum Dreiphasen-Motor zu betreiben,
   wobei die erste Halbbrücke mittels eines zweiten Umschalters, vorzugsweise mittels eines zweiten Umschalt-Relais, zwischen dem ersten Einphasen-Motor und dem zweiten Einphasen-Motor umgeschaltet werden kann,
wobei die dritte Halbbrücke sowohl mit dem Dreiphasen-Motor als auch mit dem ersten Einphasen-Motor als auch mit dem zweiten Einphasen-Motor verbunden ist.

Hierdurch können die zuvor beschriebenen Eigenschaften und Vorteile ebenso umgesetzt werden wie zuvor beschrieben. Gleichzeitig bietet die Reihenschaltung der beiden Umschalter bzw. der beiden Relais Vorteile hinsichtlich des Fehlerfalls Diagonalkurzschluss an der B6-Brücke sowie hinsichtlich der thermischen Überwachung der Motorwicklungen, wie weiter unten näher erläutert werden wird.

Gemäß einem Aspekt der Erfindung ist der Frequenzumrichter ausgebildet,
- den Dreiphasen-Motor im Hochlauf mittels aller drei Halbbrücken zu betreiben und,
- nach Abschluss des Hochlaufs, den Dreiphasen-Motor nur mittels der ersten Halbbrücke und der dritten Halbbrücke oder nur mittels der zweiten Halbbrücke und der dritten Halbbrücke zu betreiben.

Somit kann zunächst ein "normaler" Betrieb des Dreiphasen-Motors seitens des Frequenzumrichters erfolgen (mit einer Bestromung, die ein Drehfeld erzeugt), um diesen zumindest ausreichend in Gang zu versetzen, so dass Winkellagen des Strom- oder Flussvektors des Dreiphasen-Motors, in denen ein Anlaufen des Dreiphasen-Motors mit lediglich nur zwei Phasen nicht möglich ist, vom bereits in Rotation versetzten Rotor überwunden werden können und somit die Rotation des Rotors des Dreiphasen-Motors nicht verhindern können.

Gemäß einem weiteren Aspekt der Erfindung erfolgt nach Abschluss des Hochlaufs des Dreiphasen-Motors mittels aller drei Halbbrücken und vor dem Betreiben des Dreiphasen-Motors nur mittels der ersten Halbbrücke und der dritten Halbbrücke oder nur mittels der zweiten Halbbrücke und der dritten Halbbrücke ein Betreiben des Dreiphasen-Motors mittels aller drei Halbbrücken mit einer geringeren Spannung des Frequenzumrichters als beim Hochlauf oder nach Abschluss des Hochlaufs des Dreiphasen-Motors mittels aller drei Halbbrücken erfolgt. So kann der Dreiphasen-Motors im noch dreiphasigen Betrieb in einen Drehzustand versetzt werden, welcher etwa dem Dreh- bzw. Betriebszustand entspricht, welcher von den beiden verbleibenden Phasen umgesetzt wird. Dies kann den Übergang vom dreiphasigen Betrieb in den zweiphasigen Betrieb des Dreiphasen-Motors vereinfachen bzw. glatter gestalten.

Gemäß einem weiteren Aspekt der Erfindung liegt der Abschluss des Hochlaufs vor, falls wenigstens eine vorbestimmte Drehzahl oder eine vorbestimmte Drehgeschwindigkeit des Dreiphasen-Motors erreicht oder eine vorbestimmte Zeitdauer überschritten ist. Dies kann jeweils sicherstellen, dass die Rotation des Rotors des Dreiphasen-Motors ausreichend schnell erfolgt, um die besagten Winkellagen des Strom- oder Flussvektors zu überwinden.

Gemäß einem weiteren Aspekt der Erfindung erfolgt ein zusätzliches Betreiben eines der Einphasen-Motoren zum Dreiphasen-Motor erst bei Betreiben des Dreiphasen-Motors nur mittels der ersten Halbbrücke und der dritten Halbbrücke oder nur mittels der zweiten Halbbrücke und der dritten Halbbrücke erfolgt. Dies kann den Übergang zwischen den beiden Betriebsarten des Dreiphasen-Motors wie zuvor beschrieben gewährleisten.

Gemäß einem weiteren Aspekt der Erfindung ist die zweite Halbbrücke nur mit dem Dreiphasen-Motor verbunden. Dies kann eine konkrete Umsetzung darstellen. Diese Verbindung kann je nach Ausführung der Schaltung festverbunden sein oder mittels des zweiten Umschalters bzw. des zweiten Relais erfolgen.

Gemäß einem weiteren Aspekt der Erfindung entspricht die Ruhestellung des Umschalters, vorzugsweise des Umschalt-Relais, demjenigen Motor, welcher häufiger verwendet wird. Dies kann die Betätigung bzw. die Bestromung des Umschalters minimieren.

Gemäß einem weiteren Aspekt der Erfindung weist das Antriebssystem eine Steuerungseinheit auf, welche ausgebildet ist, die erste Halbbrücke, die zweite Halbbrücke und die dritte Halbbrücke zu betreiben. Somit kann auch hinsichtlich der Umsetzung der Steuerung der Halbbrücken bzw. des Frequenzumrichters der Aufwand etc. reduziert werden, indem alle drei Halbbrücken von einer gemeinsamen Steuerungseinheit betrieben bzw. gesteuert werden können.

Gemäß einem weiteren Aspekt der Erfindung ist die Steuerungseinheit ausgebildet,
- mittels der ersten Halbbrücke, der zweiten Halbbrücke und der dritten Halbbrücke den Dreiphasen-Motor oder
- mittels der ersten Halbbrücke und der dritten Halbbrücke den ersten Einphasen-Motor oder
- mittels der ersten Halbbrücke und der dritten Halbbrücke den ersten Einphasen-Motor und mittels der zweiten Halbbrücke und der dritten Halbbrücke den Dreiphasen-Motor
zu betreiben. Dies kann eine konkrete Umsetzung darstellen.

Gemäß einem weiteren Aspekt der Erfindung ist die Steuerungseinheit ferner ausgebildet, entweder
- mittels der zweiten Halbbrücke und der dritten Halbbrücke den zweiten Einphasen-Motor oder
- mittels der zweiten Halbbrücke und der dritten Halbbrücke den zweiten Einphasen-Motor und mittels der ersten Halbbrücke und der dritten Halbbrücke den Dreiphasen-Motor
zu betreiben. Dies kann eine konkrete Umsetzung des Betreibens des zweiten Einphasen-Motors darstellen.

Gemäß einem weiteren Aspekt der Erfindung ist die Steuerungseinheit ferner ausgebildet, entweder
- mittels der ersten Halbbrücke und der dritten Halbbrücke den zweiten Einphasen-Motor oder
- mittels der ersten Halbbrücke und der dritten Halbbrücke den zweiten Einphasen-Motor und mittels der zweiten Halbbrücke und der dritten Halbbrücke den Dreiphasen-Motor
zu betreiben. Dies kann eine alternative konkrete Umsetzung des Betreibens des zweiten Einphasen-Motors darstellen.

Gemäß einem weiteren Aspekt der Erfindung weist die erste Halbbrücke eine erste Strommesseinrichtung, vorzugsweise einen ersten Messwiderstand auf, die zweite Halbbrücke weist eine zweite Strommesseinrichtung, vorzugsweise einen zweiten Messwiderstand auf und die dritte Halbbrücke weist eine dritte Strommesseinrichtung, vorzugsweise einen dritten Messwiderstand auf,
wobei beim Betrieb des Dreiphasen-Motor mittels aller drei Halbbrücken die erste Strommesseinrichtung, die zweite Strommesseinrichtung und die dritte Strommesseinrichtung zur Strommessung und zur Regelung des Dreiphasen-Motors verwendet werden,
wobei im Betrieb des Dreiphasen-Motors nur mittels der zweiten Halbbrücke und der dritten Halbbrücke und des ersten Einphasen-Motors oder des zweiten Einphasen-Motors mit der ersten Halbbrücke der Strom durch den ersten Einphasen-Motor oder den zweiten Einphasen-Motor über die Strommesseinrichtung, der Strom durch den Dreiphasen-Motor über die Strommesseinrichtung und die Summe der Motorströme durch den ersten Einphasen-Motor oder den zweiten Einphasen-Motor und den Dreiphasen-Motor über die Strommesseinrichtung gemessen wird,
wobei im Betrieb des Dreiphasen-Motors nur mittels der ersten Halbbrücke und der dritten Halbbrücke und des zweiten Einphasen-Motors mit der zweiten Halbbrücke der Strom durch den zweiten Einphasen-Motor über die Strommesseinrichtung, der Strom durch den Dreiphasen-Motor über die Strommesseinrichtung und die Summe der Motorströme durch den zweiten Einphasen-Motor und den Dreiphasen-Motor über die Strommesseinrichtung gemessen wird,
wobei im Betrieb des ersten Einphasen-Motors und des zweiten Einphasen-Motors der Strom durch den ersten Einphasen-Motor über die Strommesseinrichtung, der Strom durch den zweiten Einphasen-Motor über die Strommesseinrichtung und die Summe der Motorströme durch den ersten Einphasen-Motor und den zweiten Einphasen-Motor über die Strommesseinrichtung gemessen wird.

Dies kann es ermöglichen, die Ströme der jeweiligen Halbbrücken bzw. des Frequenzumrichters im Betrieb, insbesondere seitens der Steuerungseinheit, zu erfassen und beispielsweise zur Regelung des jeweiligen Motors zu verwenden.

Gemäß einem weiteren Aspekt der Erfindung ist die Steuerungseinheit ausgebildet, den ersten Messwiderstand, den zweiten Messwiderstand und den dritten Messwiderstand wie vorstehend beschrieben zur Strommessung und zur Regelung des Dreiphasen-Motors zu verwenden. Auch ist die Steuerungseinheit ausgebildet, den ersten Messwiderstand und den dritten Messwiderstand zur Strommessung und zur Regelung des ersten Einphasen-Motors zu verwenden. Ferner ist die Steuerungseinheit ausgebildet, je nach Schaltung den zweiten Messwiderstand und den dritten Messwiderstand oder ebenfalls den ersten Messwiderstand und den dritten Messwiderstand zur Strommessung und zur Regelung des zweiten Einphasen-Motors zu verwenden. Hierdurch können mehrere Messwiderstände, vergleichbar den Halbbrücken, sowohl zum Betrieb des Dreiphasen-Motors als auch zum Betrieb eines der Einphasen-Motoren oder beider der Einphasen-Motoren verwendet werden.

Gemäß einem weiteren Aspekt der Erfindung weist das Antriebssystem einen Gleichrichter auf, welcher ausgebildet ist, eine Wechselspannung eines Spannungseingangs des Antriebssystems zu erhalten und eine Gleichspannung der ersten Halbbrücke, der zweiten Halbbrücke und der dritten Halbbrücke zur Verfügung zu stellen. Hierdurch kann eine Umsetzung des Antriebssystems an einer Wechselspannung erfolgen.

Gemäß einem weiteren Aspekt der Erfindung weist das Antriebssystem einen Glättungskondensator auf, welcher ausgebildet ist, die Gleichspannung des Ausgangs des Gleichrichters zu glätten. Hierdurch kann eine Restwelligkeit der gleichgerichteten Wechselspannung reduziert werden.

Die Erfindung betrifft auch ein Haushaltsgerät, vorzugsweise eine Waschmaschine oder einen Geschirrspüler, mit wenigstens einem Antriebssystem wie zuvor beschrieben. Hierdurch können die Eigenschaften und die Vorteile eines erfindungsgemäßen Antriebssystems bei einem Haushaltsgerät umgesetzt und genutzt werden.

Mit anderen Worten ist es bekannt, mit einer B6-Brücke einen 3-strängigen Motor zu betreiben. Hierbei werden die Ausgangsspannungen mittels Modulation so variiert, dass ein elektrisches Drehfeld mit variablen Spannungsamplituden erzeugt werden kann.

Zur Einsparung von Kosten soll eine "vorhandene" B6-Brücke, die eigentlich einen 3-strängigen PM-Motor ansteuert, für den geregelten Betrieb mehrerer, insbesondere zwei, 1-strängiger Motoren "mitbenutzt" werden.

Erfindungsgemäß kann der Betrieb sowohl sequentiell als auch in bestimmen Kombinationen gleichzeitig erfolgen, indem mittels Relais (1-polige Umschalter) zwischen den Antrieben umgeschaltet werden kann. Die Vorteile dieser Schaltung können sein:
- Nur eine B6 Brücke wird benötigt, um einen 3-strängigen Motor und zwei 1-strängige Motoren alternativ oder gleichzeitig zu betreiben.
- Für jeden 1-strängigen Motor, insbesondere als Permanentmagnet-Synchronmotoren (PMSM), wird lediglich ein 1-poliges Umschaltrelais benötigt.
- Ggf. kann eine nahezu kostenneutrale Umsetzung erfolgen, da jeder 1-strängige Antrieb, insbesondere als Hilfsantrieb, bei Betrieb am starren Netz ohnehin auch ein Schaltglied benötigen würde.
- Es können Merkmale für den jeden 1-strängigen Motor (Lastsensierung, Drehzahlvariabilität, ...), im Vergleich zum Betrieb am starren Netz genutzt werden.
- Es kann ein besseres akustisches Verhalten jedes geregelt betriebenen 1-strängigen Motors gegenüber ungeregeltem Betrieb am starren Netz erreicht werden. Dies kann durch die Freiheitsgrade bei Amplitude und Frequenz der Spannung sowie durch einen speziellen Regelalgorithmus (siehe DE 10 2019 110 045 A1) erreicht werden.
- Es können Ländervarianten eingespart werden.

Somit ist es möglich, zwei weitere 1-strängige Motoren, insbesondere als PMSM, zusätzlich zu einen 3-strängigen Motor, insbesondere als PMSM, an einer B6-Brücke zu betreiben.

Es ergeben sich nun mehr Betriebsarten:
- Solobetrieb eines jeden Motors
   ∘ 3-strängiger Motor M3
      ▪ beide Umschalter bzw. Relais sind ausgeschaltet.
      ▪ Es steht die volle Leistungsfähigkeit des 3-strängigen Motors M3 wie z.B. maximale Drehzahlen, maximale Lasten, Lastsensierung, gute Akustik, etc. zur Verfügung.
   ∘ erster 1-strängiger Motor M1a
      ▪ der entsprechende Umschalter bzw. das entsprechende Relais ist eingeschaltet,
      ▪ Es steht die volle Leistungsfähigkeit des ersten 1-strängigen Motors M1a zur Verfügung.
   ∘ zweiter 1-strängiger Motor M1b
      ▪ der entsprechende Umschalter bzw. das entsprechende Relais ist eingeschaltet,
      ▪ Es steht die volle Leistungsfähigkeit des zweiten 1-strängigen Motors M1b zur Verfügung.
- Kombibetrieb mehrerer Motoren M1a, M1b, M3
   ∘ In Abhängigkeit der elektrischen Auslegung eines jeden Motors und je nach "Aufteilung" der elektrischen Lastpunkte der einzelnen Motoren ist der Betrieb mehrerer Motoren M1a, M1b, M3 mit voller oder "eingeschränkter Leistungsfähigkeit" möglich.
   ∘ Der Betrieb des 3-strängigen Motors M3 in Kombination mit einem der beiden 1-strängigen Motoren M1a, M1b ist aufgrund des 2-strängigen Betriebs nur mit "reduzierter Leistungsfähigkeit" möglich.
   ∘ Betriebsfälle
      ▪ 3-strängiger Motor M3 und erster 1-strängiger Motor M1a
      ▪ 3-strängiger Motor M3 und zweiter 1-strängiger Motor M1b
      ▪ erster 1-strängiger Motor M1a und zweiter 1-strängiger Motor M1b

Vorzugsweise kann der Betrieb sensorlos erfolgen, d.h. ohne zusätzliche Sensorik (Hardware) zur Erfassung der Rotorlage. Die hier beschriebene Schaltungstopologie und die Betriebsarten können aber auch bei sensorbehafteten Lösungen verwendet werden.

Grundsätzlich können hierbei die Motoren entweder gesteuert (z.B. U/f-Betrieb) oder geregelt, insbesondere mittels einer geregelten Blockansteuerung, betrieben werden. Letzteres Verfahren kann nicht nur für den Anlauf, sondern auch für den Betrieb bei höheren Drehzahlen eingesetzt werden.

Durch die Verschaltung der drei Motoren mittels Relais als Umschalter an einer B6-Brücke ergeben sich unterschiedliche Kombinationen und Betriebsarten, wie bereits zuvor (hier weiter oben) hinsichtlich der möglichen Betriebsarten der drei Motoren (Solo- oder Kombibetrieb) beschrieben.

Eine derartige erfindungsgemäße Schaltungstopologie kann beispielsweise bei Geschirrspülautomaten für den Betrieb von Laugenpumpe und bzw. oder Trocknungsgebläse in Betracht gezogen. Für eine derartige Anwendung in einem Geschirrspüler könnte es sich um folgende Antriebe handeln:
- M3 (Geschirrspülerumwälzpumpe): 3-strängiger PMSM, Drehfeldmotor, sensorlos, in der Regel betrieben mit einer feldorientierten Regelung, aber auch als BLDC-Motor denkbar
- M1a (geregelte Ablaufpumpe): 1-strängiger PMSM, Wechselstrommotor, sensorlos, Regelverfahren: EMK-basierte Verfahren, z.B. PLL oder Blockansteuerung
- M1b (geregeltes Autokondensationstrocknunggebläse): 1-strängiger PMSM, Wechselstrommotor, sensorlos, Regelverfahren: EMK-basierte Verfahren, z.B. PLL oder Blockansteuerung

Für eine derartige Anwendung in einem Geschirrspüler wären folgende Betriebsarten im Kombibetrieb möglich bzw. erforderlich:
- 3-strängiger Motor M3 und erster 1-strängiger Motor M1a
   ∘ Betrieb der Umwälzpumpe gleichzeitig zur Ablaufpumpe
   ∘ Nützlich bzw. erforderlich z.B. ganz bestimmte Programmabschnitte während des Spülprogramms eines Geschirrspülers, z.B. für eine indirekte Beladungserkennung, ein Teilabpumpen, oder weitere Merkmale des Gerätes
- erster 1-strängiger Motor M1a und zweiter 1-strängiger Motor M1b
   ∘ Betrieb der Ablaufpumpe gleichzeitig mit dem Gebläse
   ∘ Nützlich bzw. erforderlich um z.B. während der Trocknung Kondensat abzufördern.

Erfindungsgemäß ist es grundsätzlich auch möglich, Frequenzumrichter mit mehr Phasen (also vier und mehr) zu verwenden, um weitere 1-strängige Motoren in Kombinationen dort zu verschalten, wie zuvor beschrieben.

Erfindungsgemäß ist ferner eine zweite Schaltungsvariante möglich, bei welcher an der B6-Brücke ein 3-strängiger Motor und zusätzlich mindestens zwei 1-strängige Motoren betrieben werden, wobei zwischen den 1-strängigen Motoren mit einem Umschalter wie beispielsweise mit einem Relais umgeschaltet werden kann. Weitere 1-strängige Motoren können durch jeweils einen zusätzlichen Umschalter bzw. durch jeweils ein zusätzliches Relais ergänzt werden.

Vorteilhaft an dieser Schaltungsvariante ist, dass beim möglichen Auftreten des Fehlerfalls "Diagonalkurzschluss" an der B6-Brücke (in diesem Beispiel beim Auftreten eines Diagonalkurzschlusses zwischen der ersten und der zweiten Halbbrücke), es nicht zu einem Stromfluss durch die in der sich ergebenden Schaltungskonstellation in Reihe geschalteten 1-strängigen Motoren kommen kann. Außerdem kann unter der Annahme, dass die zwei 1-strängigen Motoren gleiche oder ähnliche thermische Eigenschaften besitzen und nicht in Überlast betrieben werden, auf eine zusätzliche, sicherheitsrelevante Überwachung des Umschalters zwischen den 1-strängigen Motoren verzichtet werden.

Somit ist es auch in diesem Fall möglich, einen 3-strängigen Motor und zwei 1-strängige Motoren an einer B6-Brücke zu betreiben. Der 3-strängige Motor und die 1-strängigen Motoren können jeweils separat betrieben werden. Auch kann ein 1-strängiger Motor gemeinsam mit dem 3-strängigen Motor, letzterer mit reduzierter Leistungsfähigkeit, betrieben werden.

Gleichzeitig kann mittels dieser Schaltungsvariante eine möglichst kostengünstige Lösung geschaffen werden, die auch alle Sicherheitsanforderungen hinsichtlich der softwaremäßigen Wicklungstemperaturüberwachung erfüllen kann. Dabei gibt es zwei Fälle zu unterscheiden. Der Diagonalkurzschluss innerhalb der B6-Brücke und die Erwärmung der Wicklungen bei Motorüberlast. Durch die vorgeschlagene Schaltungsvariante vereinfacht sich der Schutz gegen Diagonalkurzschluss und bei thermisch ähnlichen Motoren ohne Überlastbetrieb auch der Aufwand für die Wicklungstemperaturüberwachung.

Somit wird bei dieser Schaltungsvariante an einer B6-Brücke ein 3-strängiger Motor betrieben und zusätzlich mindestens zwei 1-strängige Motoren, zwischen denen mit einem Umschalter in Form eines Relais umgeschaltet werden kann. Weitere 1-strängige Motoren können durch jeweils ein zusätzliches Relais ergänzt werden. Es kann entweder der 3-strängige Motor allein, einer der 1-strängigen Motoren allein oder der 3-strängige Motor im 2-Phasenbetrieb mit einem der 1-strängigen Motoren gemeinsam betrieben werden.

Vorteil dieser Schaltungsvariante ist der Fehlerfall Diagonalkurzschluss an der B6-Brücke. Es gibt bei dieser Variante keinen Diagonalkurzschluss über zwei 1-strängige Motoren, die dann quasi in Reihe geschaltet wären. Ein Diagonalkurzschluss erfolgt entweder über zwei Phasen des 3-strängigen Motors oder über eine Phase des 3-strängigen Motors und eine Phase eines der 1-strängigen Motoren. Da der Fehler Diagonalkurzschluss üblicherweise über eine Sicherung abgefangen wird, darf der Widerstand nicht zu groß sein, was bei zwei in Reihe geschalteten 1-strängigen Motoren der Fall sein kann.

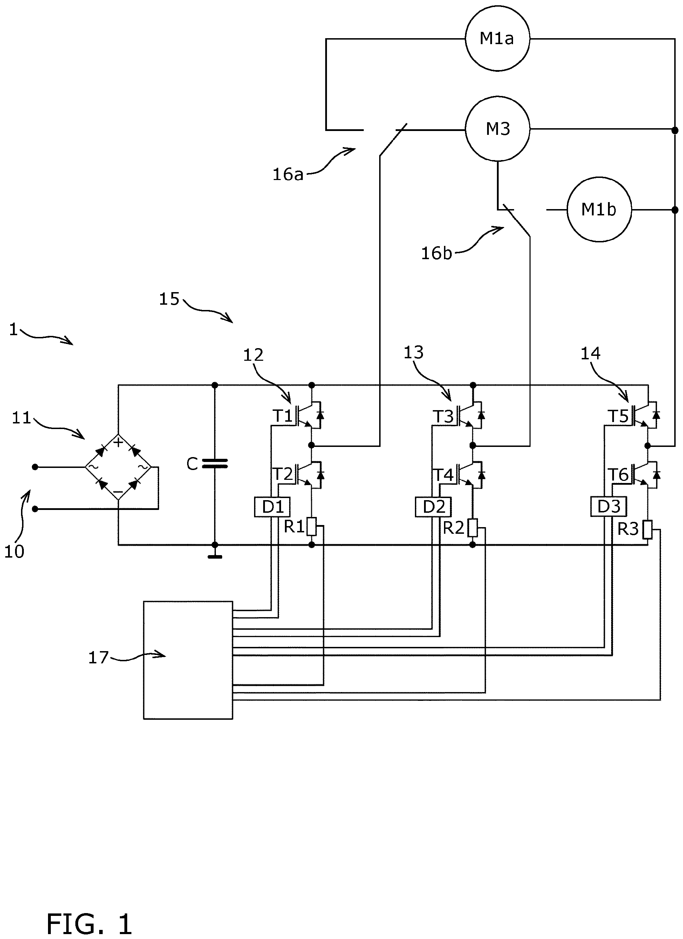

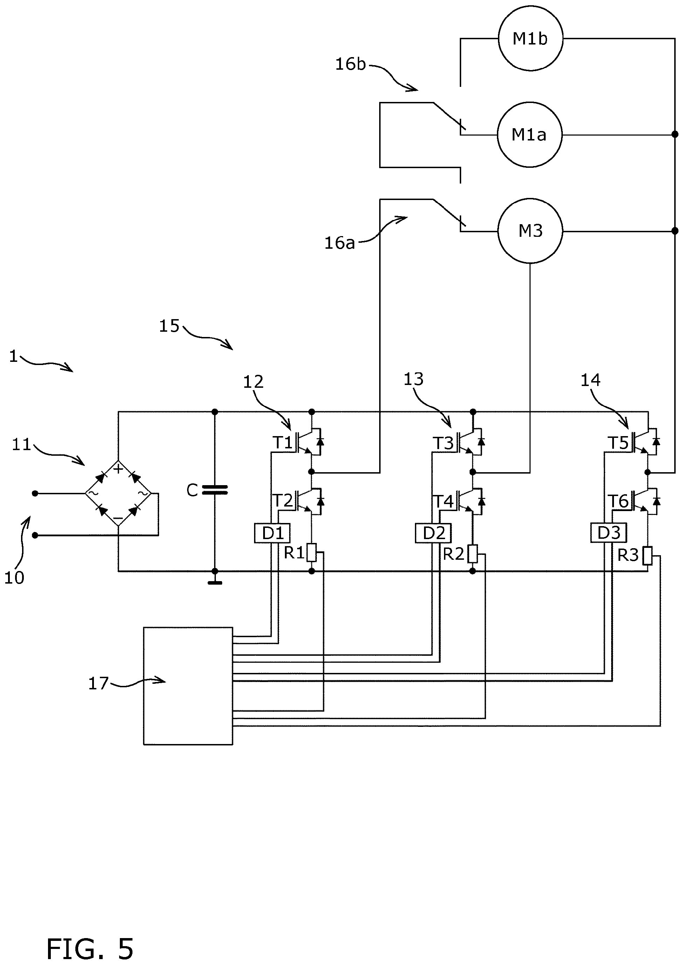

Für die thermische Überwachung der Motorwicklungen ist nach Norm eine 2-Fehlersicherheit erforderlich. Dabei ist die Schaltstellung der Relais für die Umschaltung der Motoren zu erfassen. Dazu werden bei der zuvor beschriebenen ersten Schaltungsvariante (von der Beispiele in den Fig. 1-4 gezeigt sind) insgesamt fünf Phasenspannungsmessungen benötigt. Unter der Annahme, dass die zwei 1-strängigen Motoren gleiche oder ähnliche thermische Eigenschaften besitzen und nicht in Überlast betrieben werden, kann bei der zweiten Schaltungsvariante (von der Beispiele in den Fig. 5-7 gezeigt sind) auf eine Überwachung der Relaisumschaltung zwischen den 1-strängigen Motoren verzichtet werden. Dadurch reduziert sich die Anzahl der benötigten Phasenspannungsmessungen auf vier.

Mehrere Ausführungsbeispiele der Erfindung sind in den Zeichnungen rein schematisch dargestellt und werden nachfolgend näher beschrieben. Es zeigt
- Figuren 1 bis 4: ein Schaltungsbild eines erfindungsgemäßen Antriebssystems gemäß eines ersten Ausführungsbeispiels in verschiedenen Schaltstellungen; und
- Figuren 5 bis 7: ein Schaltungsbild eines erfindungsgemäßen Antriebssystems gemäß eines zweiten Ausführungsbeispiels in verschiedenen Schaltstellungen.

Es ist bekannt, ein Antriebssystem 1 über einen Spannungseingang 10 an einer Wechselspannung zu betreiben, indem die Wechselspannung des Spannungseingangs 10 über einen Gleichrichter 11 in eine Gleichspannung gewandelt und dann mittels eines Glättungskondensators C geglättet wird.

Die geglättete Gleichspannung wird nun parallel an eine erste Halbbrücke 12, an eine zweite Halbbrücke 13 und an eine dritte Halbbrücke 14 gelegt, welche gemeinsam einen Frequenzumrichter 15 bilden. Die erste Halbbrücke 12 weist einen ersten Leistungshalbleiter T1, einen zweiten Leistungshalbleiter T2, einen ersten Treiber D1 und einen ersten Messwiderstand R1 als ersten Shunt R1 auf. Die zweite Halbbrücke 13 weist einen dritten Leistungshalbleiter T3, einen vierten Leistungshalbleiter T4, einen zweiten Treiber D2 und einen zweiten Messwiderstand R2 als zweiten Shunt R2 auf. Die dritte Halbbrücke 14 weist einen fünften Leistungshalbleiter T5, einen sechsten Leistungshalbleiter T6, einen dritten Treiber D3 und einen dritten Messwiderstand R3 als dritten Shunt R3 auf.

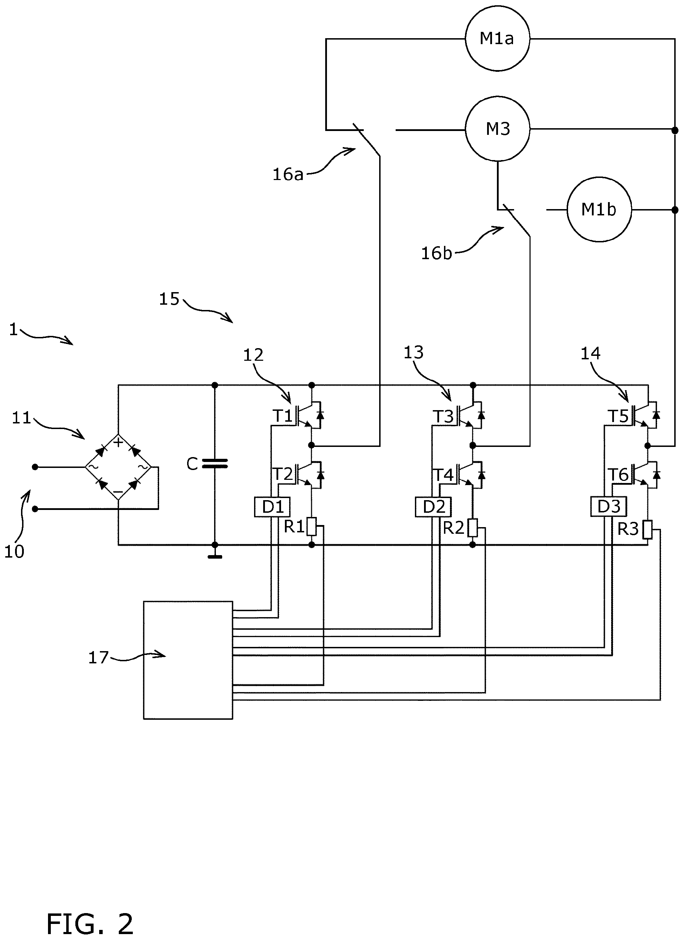

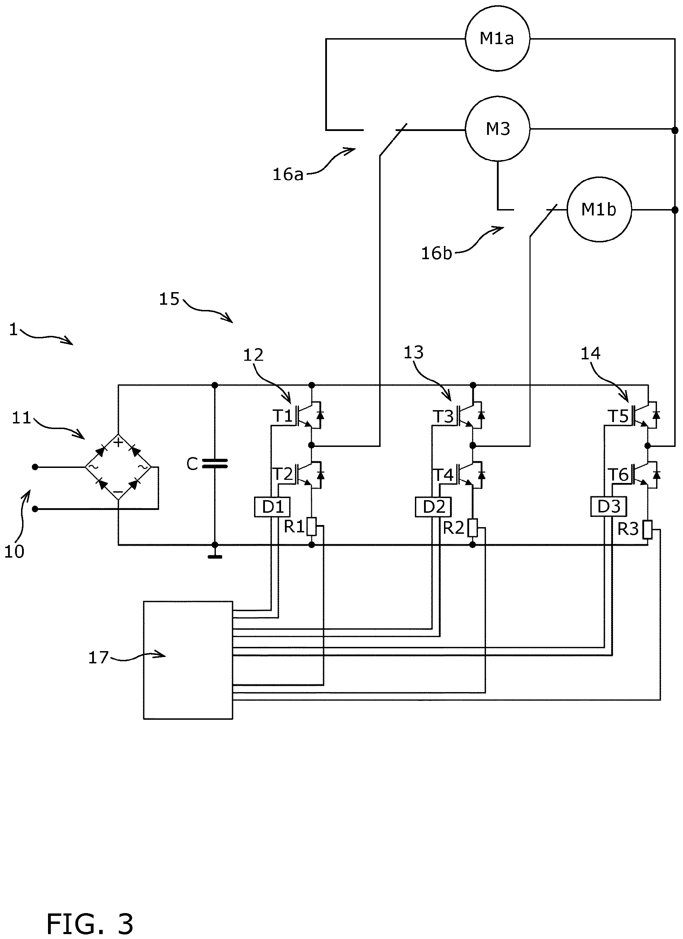

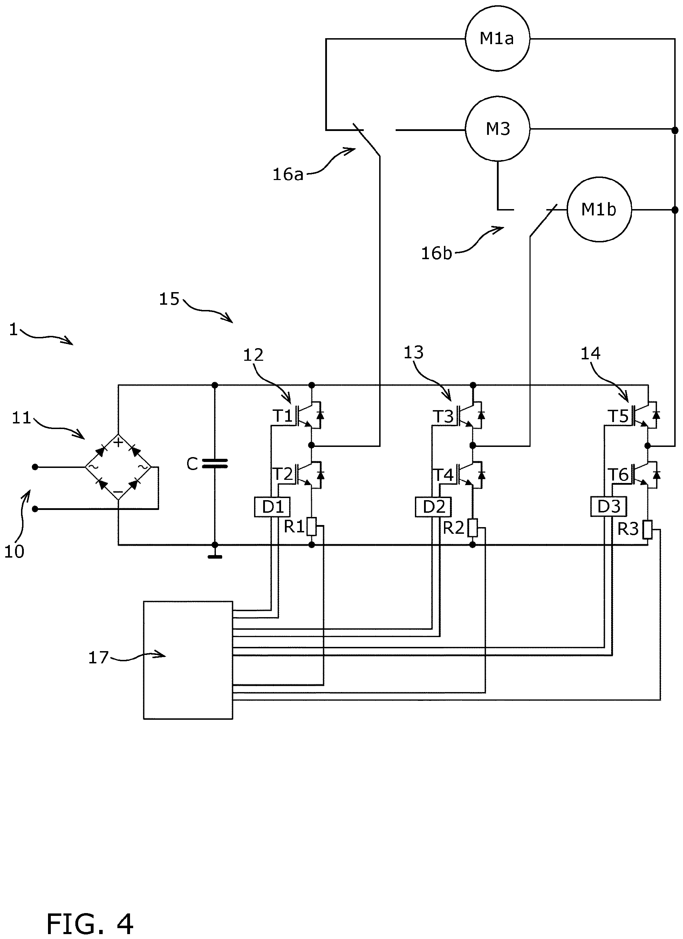

Gemäß dem ersten Ausführungsbeispiel der Figuren 1 bis 4 sind ein Dreiphasen-Motor M3 als Dreiphasen-Synchronmotor M3 sowie ein erster Einphasen-Motor M1a als erster Einphasen-Synchronmotor M1a und ein zweiter Einphasen-Motor M1b als zweiter Einphasen-Synchronmotor M1b vorgesehen, welche mittels der drei Halbbrücken 12, 13, 14 betrieben werden können. Hierzu ist die erste Halbbrücke 12 mittels eines ersten Umschalters 16a in Form eines ersten Umschalt-Relais 16a entweder mit dem Dreiphasen-Motor M3 oder mit dem ersten Einphasen-Motor M1a verbunden, so dass durch Umschalten des ersten Umschalters 16a entweder der Dreiphasen-Motor M3, siehe Figuren 1 und 3, oder der erste Einphasen-Motor M1a, siehe Figuren 2 und 4, mit der ersten Halbbrücke 12 verbunden ist. Ebenso ist die zweite Halbbrücke 13 mittels eines zweiten Umschalters 16b in Form eines zweiten Umschalt-Relais 16b entweder mit dem Dreiphasen-Motor M3 oder mit dem zweiten Einphasen-Motor M1b verbunden, so dass durch Umschalten des zweiten Umschalters 16b entweder der Dreiphasen-Motor M3, siehe Figuren 1 und 2, oder der zweite Einphasen-Motor M1b, siehe Figuren 3 und 4, mit der zweiten Halbbrücke 13 verbunden ist. Der Dreiphasen-Motor M3, der erste Einphasen-Motor M1a und der zweite Einphasen-Motor M1b sind fest mit der dritten Halbbrücke 14 verbunden.

Entsprechend können durch das Umschalten des ersten Umschalters 16a und des zweiten Umschalters 16b entweder der Dreiphasen-Motor M3 alleine, der erste Einphasen-Motor M1a alleine, der zweite Einphasen-Motor M1b alleine, der Dreiphasen-Motor M3 in Kombination mit dem ersten Einphasen-Motor M1a, der Dreiphasen-Motor M3 in Kombination mit dem zweiten Einphasen-Motor M1b oder die beiden Einphasen-Motoren M1a, M1b gemeinsam vom Frequenzumrichter 15 betrieben werden. Der Betrieb eines der Motoren M1a, M1b, M3 alleine sowie der beiden Einphasen-Motoren M1a, M1b gemeinsam kann wie bekannt seitens des Frequenzumrichters 15 bzw. dessen Steuerungseinheit 17 erfolgen.

Es ist ferner möglich, den Dreiphasen-Motor M3 und einen der beiden Einphasen-Motoren M1a, M1b gleichzeitig, d.h. parallel zueinander, zu betreiben, siehe Figuren 2 und 3. Zum Erreichen dieses Betriebsfalls wird der Dreiphasen-Motor M3 zunächst wie bisher bekannt betrieben und mit allen drei Halbbrücken 12, 13 und 14 verbunden, siehe Figur 1. Ist eine ausreichend schnelle Rotation des Rotors des Dreiphasen-Motors M3 erreicht, so dass Winkellagen des Strom- oder Flussvektors des Dreiphasen-Motors M3, in denen ein Anlaufen des Dreiphasen-Motors M3 mit lediglich nur zwei Phasen nicht möglich ist, überwunden werden können, was als Hochlauf bezeichnet werden kann, so wird die Drehzahl des Dreiphasen-Motors M3 auf etwa die Hälfte der Nenndrehzahl reduziert. Nun kann mittels des ersten Umschalters 16a der erste Einphasen-Motor M1a mit der ersten Halbbrücke 12 verbunden werden, siehe Figur 2, so dass dessen paralleler Betrieb erfolgen kann, während der Dreiphasen-Motor M3 nur mittels der zweiten Halbbrücke 13 und der dritten Halbbrücke 14 mit gegenüber der Nenndrehzahl reduzierter Drehzahl oder gegenüber der Nennleistung reduzierter Leistung weiter betrieben wird. Dies kann alternativ ebenso mittels des zweiten Umschalters 16b für den zweiten Einphasen-Motor M1b erfolgen, siehe Figur 3.

Um den Frequenzumrichter 15 bzw. dessen Halbbrücken 12, 13, 14 entsprechend anzusteuern, ist eine Steuerungseinheit 17 in Form eines Rechners 17 über die drei Treiber D1, D2, D3 jeweils mit den sechs Leistungshalbleitern T1-T6 verbunden. Auch sind die drei Messwiderstände R1, R2, R3 mit der Steuerungseinheit 17 verbunden, so dass im Betrieb die Ströme im Dreiphasen-Motor M3 sowie in den Einphasen-Motoren M1a, M1b erfasst und der Dreiphasen-Motor M3 sowie die Einphasen-Motoren M1a, M1b hierauf basierend von der Steuerungseinheit 17 geregelt betrieben werden können.

In der oben beschriebenen Konstellation Figur 1, bei welcher der Betrieb des Dreiphasen-Motors M3 mit normalem Ansteuerungsverfahren für den Dreiphasen-Motor M3 (z.B. Vektorregelung und Beobachter zur Rotorlageerfassung) erfolgt, setzen sich die mittels der Messwiderstände R1, R2, R3 erfassten Motorströme wie folgt zusammen: Messung des Stroms durch Motor M3 (I_M3_U) über Messwiderstand R1, Messung des Stroms durch Motor M3 (I_M3_V) über Messwiderstand R2 und Messung des Stroms durch den Motor M3 (I_M3_W) über Messwiderstand R3.

In der oben beschriebenen Konstellation Figur 2, bei welcher der Betrieb des Einphasen-Motors M1a gleichzeitig mit dem Dreiphasen-Motor M3 mit speziellem Ansteuerungsverfahren für den Dreiphasen-Motor M3 (Betrieb mit nur zwei Phasen) erfolgt, setzen sich die mittels der Messwiderstände R1, R2, R3 erfassten Motorströme wie folgt zusammen: Messung des Stroms durch Motor M1a (I_M1a) über Messwiderstand R1, Messung des Stroms durch Motor M3 (I_M3) über Messwiderstand R2 und Messung der Summe der Ströme durch die Motoren M1a und M3 über Messwiderstand R3.

In der oben beschriebenen Konstellation Figur 3, bei welcher der Betrieb des Einphasen-Motors M1b gleichzeitig mit dem Dreiphasen-Motor M3 mit speziellem Ansteuerungsverfahren für den Dreiphasen-Motor M3 (Betrieb mit nur zwei Phasen) erfolgt, setzen sich die mittels der Messwiderstände R1, R2, R3 erfassten Motorströme wie folgt zusammen: Messung des Stroms durch Motor M3 (I_M3) über Messwiderstand R1, Messung des Stroms durch Motor M1b (I_M1b) über Messwiderstand R2 und Messung der Summe der Ströme durch die Motoren M1b und M3 über Messwiderstand R3.

In der oben beschriebenen Konstellation Figur 4, bei welcher der Betrieb der beiden Einphasen-Motoren M1a und M1b gleichzeitig erfolgt, setzen sich die mittels der Messwiderstände R1, R2, R3 erfassten Motorströme wie folgt zusammen: Messung des Stroms durch Motor M1a (I_M1a) über Messwiderstand R1, Messung des Stroms durch Motor M1b (I_M1b) über Messwiderstand R2 und Messung der Summe der Ströme durch die Motoren M1a und M1b über Messwiderstand R3.

Der Dreiphasen-Motor M3 kann ein Hauptantrieb und die Einphasen-Motoren M1a, M1b als Hilfsantriebe eines Haushaltsgeräts sein. Entsprechend können die beiden Umschalter 16a, 16b als Umschalt-Relais 16a, 16b im Ruhezustand den Dreiphasen-Motor M3 als Hauptantrieb mit der ersten Halbbrücke 12 bzw. mit der zweiten Halbbrücke 13 verbinden, da der Dreiphasen-Motor M3 als Hauptantrieb häufiger betrieben wird als die Einphasen-Motoren M1a, M1b als Hilfsantriebe.

In jedem Fall können die Vorteile des Betreibens eines elektrischen Motor M1a, M1b, M3 mittels des Frequenzumrichters 15 sowohl bei dem Dreiphasen-Motor M3 als auch bei den Einphasen-Motoren M1a, M1b genutzt werden, insbesondere die Vorteile eines jeweiligen geregelten Betreibens. Gleichzeitig kann der schaltungstechnische Aufwand hierfür sowie die Herstellungskosten, der Platzbedarf, der Energieverbrauch sowie die Wärmeabgabe des Antriebssystems 1 geringgehalten werden.

Dies lässt sich alternativ auch mittels des Schaltungsbilds des zweiten Ausführungsbeispiels der Figuren 5 bis 7 umsetzen. In diesem Fall ist der zweite Umschalter 16b als zweites Umschalt-Relais 16b zwischen dem ersten Einphasen-Motor M1a und dem zweiten Einphasen-Motor M1b angeordnet. Der Dreiphasen-Motor M3 ist fest mit der zweiten Halbbrücke 13 verbunden. Der Dreiphasen-Motor M3, der erste Einphasen-Motor M1a und der zweite Einphasen-Motor M1b sind fest mit der dritten Halbbrücke 14 verbunden.

Die erste Halbbrücke 12 wird mittels des ersten Umschalters 16a als erstes Umschalt-Relais 16a entweder mit dem Dreiphasen-Motor M3 oder mit dem zweiten Umschalter 16b als zweites Umschalt-Relais 16b verbunden, so dass durch Umschalten des ersten Umschalters 16a der Dreiphasen-Motor M3 mit der ersten Halbbrücke 12 verbunden werden kann bzw. in Ruhelage des ersten Umschalters 16a mit der ersten Halbbrücke 12 verbunden ist, siehe Figur 5. In dieser Schaltstellung kann lediglich der Dreiphasen-Motor M3 betrieben werden.

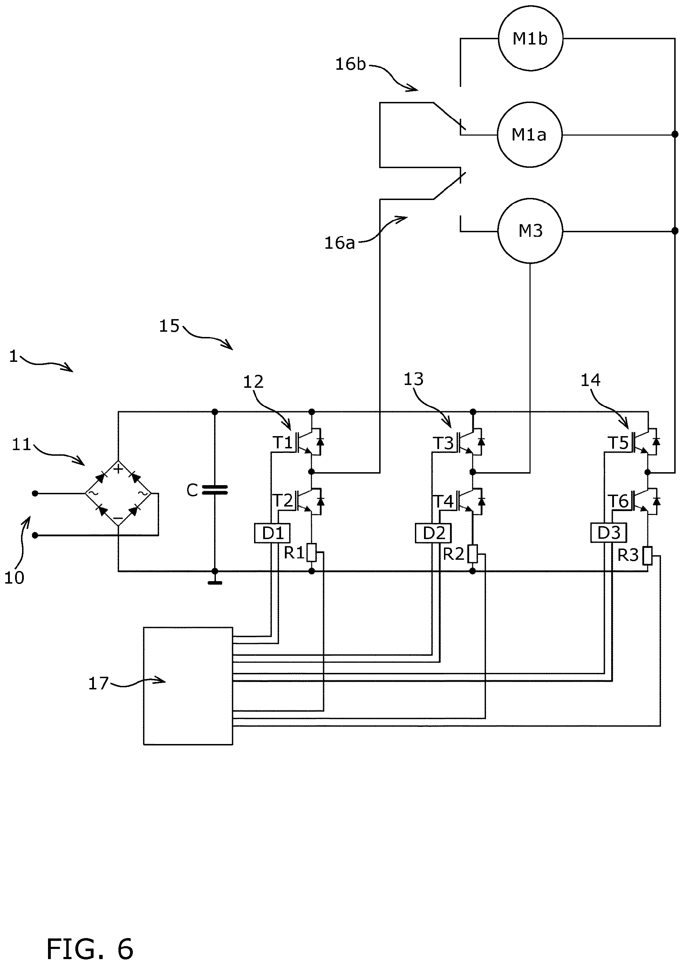

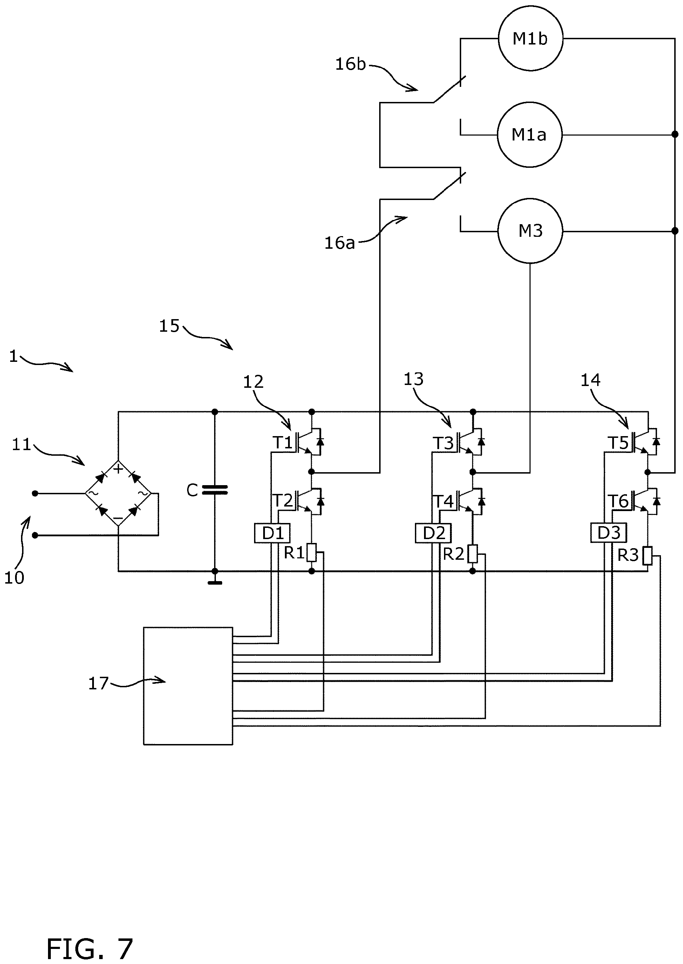

Befindet sich der erste Umschalter 16a in der anderen Schaltstellung, so ist der zweite Umschalter 16b mit der ersten Halbbrücke 12 verbunden, siehe Figuren 6 und 7. In dieser Schaltstellung kann der Dreiphasen-Motor M3 ebenfalls betrieben werden, jedoch lediglich mit reduzierter Leistung bzw. mit reduzierter Drehzahl, wie zuvor anhand des ersten Ausführungsbeispiels beschrieben. Drüber hinaus kann zusätzlich oder auch alleine entweder der erste Einphasen-Motor M1a betrieben werden, falls der erste Einphasen-Motor M1a mittels des zweiten Umschalters 16b mit der ersten Halbbrücke 12 verbunden ist, siehe Figur 6, oder es kann der zweite Einphasen-Motor M1b zusätzlich zum Dreiphasen-Motor M3 oder alleine betrieben werden, falls der zweite Einphasen-Motor M1b mittels des zweiten Umschalters 16b mit der ersten Halbbrücke 12 verbunden ist, siehe Figur 7.

### Bezugszeichenliste (Bestandteil der Beschreibung)

- C: Glättungskondensator
- D1: Erster Treiber
- D2: Zweiter Treiber
- D3: Dritter Treiber
- M1a: Erster einphasen (Synchron-)Motor
- M1b: Zweiter einphasen (Synchron-)Motor
- M3: Dreiphasen (Synchron-)Motor
- R1-R3: Messwiderstände; Shunts
- T1-T6: Leistungshalbleiter

- 1: Antriebssystem
- 10: Spannungseingang
- 11: Gleichrichter
- 12: Erste Halbbrücke
- 13: Zweite Halbbrücke
- 14: Dritte Halbbrücke
- 15: Frequenzumrichter
- 16a: Erster Umschalter; erstes Umschalt-Relais
- 16b: Zweiter Umschalter; zweites Umschalt-Relais
- 17: Steuerungseinheit; Rechner

## Patentansprüche

1. Antriebssystem (1)
mit wenigstens einem Dreiphasen-Motor (M3), vorzugsweise einem Dreiphasen-Synchronmotor (M3), und
mit wenigstens einem Frequenzumrichter (15) mit einer ersten Halbbrücke (12), einer zweiten Halbbrücke (13) und einer dritten Halbbrücke (14),
wobei der Frequenzumrichter (15) ausgebildet ist, den Dreiphasen-Motor (M3) mittels aller drei Halbbrücken (12, 13, 14) zu betreiben,
**gekennzeichnet durch**
ferner wenigstens einen ersten Einphasen-Motor (M1a), vorzugsweise einen ersten Einphasen-Synchronmotor (M1a), und
ferner wenigstens einen zweiten Einphasen-Motor (M1b), vorzugsweise einen zweiten Einphasen-Synchronmotor (M1b),
wobei der Frequenzumrichter (15) ferner ausgebildet ist,
• den Dreiphasen-Motor (M3) nur mittels der ersten Halbbrücke (12) und der dritten Halbbrücke (14) oder nur mittels der zweiten Halbbrücke (13) und der dritten Halbbrücke (14) zu betreiben,
• den ersten Einphasen-Motor (M1a) mittels der ersten Halbbrücke (12) und der dritten Halbbrücke (14) alternativ oder zusätzlich zum Dreiphasen-Motor (M3) zu betreiben,
wobei die erste Halbbrücke (12) mittels eines ersten Umschalters (16a), vorzugsweise mittels eines ersten Umschalt-Relais (16a), zwischen dem Dreiphasen-Motor (M3) und dem ersten Einphasen-Motor (M1a) umgeschaltet werden kann, und
• den zweiten Einphasen-Motor (M1b) mittels der zweiten Halbbrücke (13) und der dritten Halbbrücke (14) alternativ oder zusätzlich zum Dreiphasen-Motor (M3) zu betreiben,
wobei die zweite Halbbrücke (13) mittels eines zweiten Umschalters (16b), vorzugsweise mittels eines zweiten Umschalt-Relais (16b), zwischen dem Dreiphasen-Motor (M3) und dem zweiten Einphasen-Motor (M1b) umgeschaltet werden kann, und
wobei die dritte Halbbrücke (14) sowohl mit dem Dreiphasen-Motor (M3) und als auch mit dem ersten Einphasen-Motor (M1a) als auch mit dem zweiten Einphasen-Motor (M1b) verbunden ist.

2. Antriebssystem (1)
mit wenigstens einem Dreiphasen-Motor (M3), vorzugsweise einem Dreiphasen-Synchronmotor (M3), und
mit wenigstens einem Frequenzumrichter (15) mit einer ersten Halbbrücke (12), einer zweiten Halbbrücke (13) und einer dritten Halbbrücke (14),
wobei der Frequenzumrichter (15) ausgebildet ist, den Dreiphasen-Motor (M3) mittels aller drei Halbbrücken (12, 13, 14) zu betreiben,
**gekennzeichnet durch**
ferner wenigstens einen ersten Einphasen-Motor (M1a), vorzugsweise einen ersten Einphasen-Synchronmotor (M1a), und
ferner wenigstens einen zweiten Einphasen-Motor (M1b), vorzugsweise einen zweiten Einphasen-Synchronmotor (M1b),
wobei der Frequenzumrichter (15) ferner ausgebildet ist,
• den Dreiphasen-Motor (M3) nur mittels der zweiten Halbbrücke (13) und der dritten Halbbrücke (14) zu betreiben, und
• den ersten Einphasen-Motor (M1a) oder den zweiten Einphasen-Motor (M1b) mittels der ersten Halbbrücke (12) und der dritten Halbbrücke (14) alternativ oder zusätzlich zum Dreiphasen-Motor (M3) zu betreiben,
wobei die erste Halbbrücke (12) mittels eines ersten Umschalters (16a), vorzugsweise mittels eines ersten Umschalt-Relais (16a), zwischen dem Dreiphasen-Motor (M3) und einem zweiten Umschalter (16b), vorzugsweise einem zweiten Umschalt-Relais (16b), umgeschaltet werden kann,
wobei mittels des zweiten Umschalters (16b) zwischen dem ersten Einphasen-Motor (M1a) und dem zweiten Einphasen-Motor (M1b) umgeschaltet werden kann,
wobei die erste Halbbrücke (12) mittels eines zweiten Umschalters (16b), vorzugsweise mittels eines zweiten Umschalt-Relais (16b), zwischen dem ersten Einphasen-Motor (M1a) und dem zweiten Einphasen-Motor (M1b) umgeschaltet werden kann, und
wobei die dritte Halbbrücke (14) sowohl mit dem Dreiphasen-Motor (M3) und als auch mit dem ersten Einphasen-Motor (M1a) als auch mit dem zweiten Einphasen-Motor (M1b) verbunden ist.

3. Antriebssystem (1) nach Anspruch 1 oder 2,
wobei der Frequenzumrichter (15) ausgebildet ist,
• den Dreiphasen-Motor (M3) im Hochlauf mittels aller drei Halbbrücken (12, 13, 14) zu betreiben und,
• nach Abschluss des Hochlaufs den Dreiphasen-Motor (M3) nur mittels der ersten Halbbrücke (12) und der dritten Halbbrücke (14) oder nur mittels der zweiten Halbbrücke (13) und der dritten Halbbrücke (14) zu betreiben.

4. Antriebssystem (1) nach Anspruch 3,
wobei nach Abschluss des Hochlaufs des Dreiphasen-Motors (M3) mittels aller drei Halbbrücken (12, 13, 14) und vor dem Betreiben des Dreiphasen-Motors (M3) nur mittels der ersten Halbbrücke (12) und der dritten Halbbrücke (14) oder nur mittels der zweiten Halbbrücke (13) und der dritten Halbbrücke (14) ein Betreiben des Dreiphasen-Motors (M3) mittels aller drei Halbbrücken (12, 13, 14) mit einer geringeren Spannung des Frequenzumrichters (15) als beim Hochlauf des Dreiphasen-Motors (M3) mittels aller drei Halbbrücken (12, 13, 14) und/oder einer geringeren Drehzahl des Dreiphasen-Motors (M3) als vor Abschluss des Hochlaufs bei Betrieb mittels aller drei Halbbrücken (12, 13, 14) erfolgt.

5. Antriebssystem (1) nach Anspruch 3 oder 4,
wobei der Abschluss des Hochlaufs vorliegt, falls wenigstens eine vorbestimmte Drehzahl oder eine vorbestimmte Drehgeschwindigkeit des Dreiphasen-Motors (M3) erreicht oder eine vorbestimmte Zeitdauer überschritten ist.

6. Antriebssystem (1) nach einem der vorangehenden Ansprüche,
wobei ein zusätzliches Betreiben eines der Einphasen-Motoren (M1a; M1b) zum Dreiphasen-Motor (M3) erst bei Betreiben des Dreiphasen-Motors (M3) nur mittels der ersten Halbbrücke (12) und der dritten Halbbrücke (14) oder nur mittels der zweiten Halbbrücke (13) und der dritten Halbbrücke (14) erfolgt.

7. Antriebssystem (1) einem der vorangehenden Ansprüche,
wobei die zweite Halbbrücke (13) nur mit dem Dreiphasen-Motor (M3) verbunden ist.

8. Antriebssystem (1) einem der vorangehenden Ansprüche,
wobei die Ruhestellungen der Umschalter (16a, 16b), vorzugsweise der Umschalt-Relais (16a, 16b), demjenigen Motor (M1a, M1b, M3) entspricht, welcher häufiger verwendet wird.

9. Antriebssystem (1) nach einem der vorangehenden Ansprüche, **gekennzeichnet durch**
eine Steuerungseinheit (17), welche ausgebildet ist, die erste Halbbrücke (12), die zweite Halbbrücke (13) und die dritte Halbbrücke (14) zu betreiben.

10. Antriebssystem (1) nach Anspruch 9, **dadurch gekennzeichnet, dass** die Steuerungseinheit (17) ausgebildet ist,
• mittels der ersten Halbbrücke (12), der zweiten Halbbrücke (13) und der dritten Halbbrücke (14) den Dreiphasen-Motor (M3), oder
• mittels der ersten Halbbrücke (12) und der dritten Halbbrücke (14) den ersten Einphasen-Motor (M1a), oder
• mittels der ersten Halbbrücke (12) und der dritten Halbbrücke (14) den ersten Einphasen-Motor (M1a) und mittels der zweiten Halbbrücke (13) und der dritten Halbbrücke (14) den Dreiphasen-Motor (M3)
zu betreiben.

11. Antriebssystem (1) nach Anspruch 10, wenn abhängig von Anspruch 1, **dadurch gekennzeichnet, dass**
die Steuerungseinheit (17) ferner ausgebildet ist, entweder
• mittels der zweiten Halbbrücke (13) und der dritten Halbbrücke (14) den zweiten Einphasen-Motor (M1b) oder
• mittels der zweiten Halbbrücke (13) und der dritten Halbbrücke (14) den zweiten Einphasen-Motor (M1b) und mittels der ersten Halbbrücke (12) und der dritten Halbbrücke (14) den Dreiphasen-Motor (M3)
zu betreiben.

12. Antriebssystem (1) nach Anspruch 10, wenn abhängig von Anspruch 2, **dadurch gekennzeichnet, dass**
die Steuerungseinheit (17) ferner ausgebildet ist, entweder
• mittels der ersten Halbbrücke (12) und der dritten Halbbrücke (14) den zweiten Einphasen-Motor (M1b) oder
• mittels der ersten Halbbrücke (12) und der dritten Halbbrücke (14) den zweiten Einphasen-Motor (M1b) und mittels der zweiten Halbbrücke (13) und der dritten Halbbrücke (14) den Dreiphasen-Motor (M3)
zu betreiben.

13. Antriebssystem (1) nach einem der vorangehenden Ansprüche, **dadurch gekennzeichnet, dass**
die erste Halbbrücke (12) eine erste Strommesseinrichtung (R1), vorzugsweise einen ersten Messwiderstand, aufweist,
die zweite Halbbrücke (13) eine zweite Strommesseinrichtung (R2), vorzugsweise einen zweiten Messwiderstand, aufweist, und
die dritte Halbbrücke (14) eine dritte Strommesseinrichtung (R3), vorzugsweise einen dritten Messwiderstand, aufweist,
wobei beim Betrieb des Dreiphasen-Motor (M3) mittels aller drei Halbbrücken (12, 13, 14) die erste Strommesseinrichtung (R1), die zweite Strommesseinrichtung (R2) und die dritte Strommesseinrichtung (R3) zur Strommessung und zur Regelung des Dreiphasen-Motors (M3) verwendet werden,
wobei im Betrieb des Dreiphasen-Motors (M3) nur mittels der zweiten Halbbrücke (13) und der dritten Halbbrücke (14) und des ersten Einphasen-Motors (M1) oder des zweiten Einphasen-Motors (M2) mit der ersten Halbbrücke (12) der Strom durch den ersten Einphasen-Motor (M1) oder den zweiten Einphasen-Motor (M2) über die Strommesseinrichtung (R1), der Strom durch den Dreiphasen-Motor (M3) über die Strommesseinrichtung (R2) und die Summe der Motorströme durch den ersten Einphasen-Motor (M1) oder den zweiten Einphasen-Motor (M2) und den Dreiphasen-Motor (M3) über die Strommesseinrichtung (R3) gemessen wird,
wobei im Betrieb des Dreiphasen-Motors (M3) nur mittels der ersten Halbbrücke (12) und der dritten Halbbrücke (14) und des zweiten Einphasen-Motors (M2) mit der zweiten Halbbrücke (13) der Strom durch den zweiten Einphasen-Motor (M2) über die Strommesseinrichtung (R2), der Strom durch den Dreiphasen-Motor (M3) über die Strommesseinrichtung (R1) und die Summe der Motorströme durch den zweiten Einphasen-Motor (M2) und den Dreiphasen-Motor (M3) über die Strommesseinrichtung (R3) gemessen wird,
wobei im Betrieb des ersten Einphasen-Motors (M1) und des zweiten Einphasen-Motors (M2) der Strom durch den ersten Einphasen-Motor (M1) über die Strommesseinrichtung (R1), der Strom durch den zweiten Einphasen-Motor (M2) über die Strommesseinrichtung (R2) und die Summe der Motorströme durch den ersten Einphasen-Motor (M1) und den zweiten Einphasen-Motor (M2) über die Strommesseinrichtung (R3) gemessen wird.

14. Antriebssystem (1) nach einem der vorangehenden Ansprüche, **gekennzeichnet durch**
einen Gleichrichter (11), welcher ausgebildet ist, eine Wechselspannung eines Spannungseingangs (10) des Antriebssystems (1) zu erhalten und eine Gleichspannung der ersten Halbbrücke (12), der zweiten Halbbrücke (13) und der dritten Halbbrücke (14) zur Verfügung zu stellen.

15. Haushaltsgerät, vorzugsweise Waschmaschine oder Geschirrspüler,
mit wenigstens einem Antriebssystem (1) nach einem der vorangehenden Ansprüche.
